# EUROPEAN PATENT APPLICATION

(11) **EP 1 860 715 A1**
(43) Date of publication of application: **28.11.2007**
(21) Application number: 06715713.1
(22) Date of filing: 14.03.2006
(51) Int. Cl.: H01M 8/04

(54) **HEAT-RETENTION AND HEATING OF REACTION GAS IN FUEL CELL SYSTEM**

(30) Priority: 15.03.2005 JP 2005072643
(71) Applicant: TOYOTA JIDOSHA KABUSHIKI KAISHA, Toyota-shi, Aichi-ken, 471-8571 (JP)
(72) Inventor: HIRAKATA, Shuji, , Toyota-shi, Aichi, 4718571 (JP)
(74) Representative: TBK-Patent
(86) International application number: PCT/JP2006/305485
(87) International publication number: WO 2006/098467

(57) **Abstract**

The invention provides a technique for reducing the adverse effects which can arise as a result of water freezing in the reaction gas channels of fuel cell systems. The fuel cell system comprises a fuel cell; a reaction gas channel in which flows reaction gas that is supplied to the fuel cell and that is discharged from the fuel cell; and a cooling water channel in which flows cooling water that has cooled the fuel cell. The cooling water channel is formed in such a way as to cover at least part of the reaction gas channel. This allows the reaction gas channel of the fuel cell system to be kept warm or heated by the cooling water. It is thus possible to reduce the adverse effects which can arise as a result of water freezing in the reaction gas channel in the fuel cell system.

## Description

### Technical Field

The present invention relates to a technique for reducing adverse effects that may arise as a result of water freezing in reaction gas channels in fuel cell systems.

### Background Art

Fuel cell systems in which power is generated by reactions between a fuel gas and oxidizing gas have been developed in the past. In fuel cells involving electrolytic membranes, water produced on the cathode side penetrates through the electrolytic membrane to the anode side. Water is therefore present in the fuel gas circulating channel of the fuel cell system. In some fuel cell systems, excess water in the fuel gas circulating channel is discharged out of the system by gas-liquid separators placed in the fuel gas circulating channel.

However, in Patent Citation 1, not all of the water in the fuel gas circulating channel is removed. When operation of the fuel cell system then ceases in cold environments, the water that has not been removed from the fuel gas circulating channel can freeze in the piping and impede the flow of fuel gas when operation is resumed. This problem similarly occurs in the oxidant gas discharge channel.

In view of the foregoing, an object of the present invention is to provide a technique for reducing the adverse effects that can occur as a result of water freezing in the reaction gas channels in fuel cell systems.

The details disclosed in Japanese Patent Application 2005-72463 are herein incorporated by reference.

### Summary of the Invention

The following structure may be adopted in the fuel cell system of the invention to address the above objects. The fuel cell system comprises: a fuel cell; a reaction gas channel in which reaction gas supplied to the fuel cell and discharged from the fuel cell flows; and a cooling water channel in which cooling water that has cooled the fuel cell flows. The cooling water channel covers at least part of the reaction gas channel.

This allows the warmth of the reaction gas channel of the fuel cell system to be retained by the cooling water or the reaction gas channel to be heated by the cooling water. It is thus possible to reduce the adverse effects which can arise as a result of water freezing in the reaction gas channel in the fuel cell system.

The cooling water channel may have: a cooling component configured to cool the cooling water; and a cooling water retention component in which cross section area is greater than that of a fuel cell-connected portion of the cooling water channel provided between the fuel cell and the cooling component. The fuel cell-connected portion is connected to the fuel cell. At least part of the reaction gas channel passes into the cooling water retention component. This allows the heat of the cooling water which has heated up as a result of the reaction in the fuel cell to be efficiently transferred to the reaction gas. The cooling water retention component is also preferably provided adjacent to the fuel cell.

The fuel cell system may further have: a hydrogen storage component configured to store hydrogen gas as the reaction gas.
The reaction gas channel includes: a reaction gas supply channel configured to allow hydrogen gas supplied from the hydrogen storage component to flow to the fuel cell; and a reaction gas recycling channel in which at least part of the hydrogen gas discharged from the fuel cell is supplied again to the fuel cell. At least part of the reaction gas recycling channel is covered by the cooling water channel.

This allows the cooling water to retain the warmth of the reaction gas recycling channel or to heat the reaction gas recycling channel in which flows the hydrogen gas containing water in the fuel cell. It is thus possible to effectively reduce the adverse effects which can arise as a result of frozen water, by heat retaining or heating the channels in which water tends to freeze among the reaction gas channels.

The cooling water channel may have: a cooling component configured to cool the cooling water; a cooling water recycling channel in which cooling water discharged from the cooling component is again supplied to the fuel cell; a cooling component bypass channel configured to again supply the cooling water to the fuel cell without passing through the cooling component; and a channel switching component allowing the flow of cooling water to the cooling component and the cooling component bypass channel to be selectively blocked. In such an aspect, it is preferable that the channel switching component blocks the flow of cooling water to the cooling component when the fuel cell system is not generating power.

This makes it possible to prevent the cooling water from being cooled by the cooling component when the fuel cell system is not generating power. The reaction gas channels of the fuel cell system can thus be kept warm or heated by high temperature cooling water compared to embodiments in which the cooling water flows through the cooling component when the fuel cell system is not generating power.

At least 60% of the surface of the pipes forming the reaction gas recycling channels may preferably be covered by the cooling water channel. This will make it possible to reduce the heat released from the surface of the pipes that form the reaction gas recycling channel. As a result, it will be possible to effectively reduce the adverse effects which can arise due to frozen water.

The invention is capable of being realized in a variety of embodiments, and can, for example, be realized in the form of fuel cells, motors for which the power source is fuel cells, and the like.

### Brief Description of the Drawings

Figure 1 is a block diagram schematically illustrating the structure of a fuel cell system 10 in an embodiment of the invention;
Figure 2 is a perspective view of a heat exchanger 41t of a cooling water channel 41;
Figure 3 is a graph of hydrogen gas temperature Thi1, anode exhaust gas temperature Tho1, and cooling water temperature Tw1 after operation of the fuel cell system 10 in the embodiment has ceased;
Figure 4 is a graph of hydrogen gas temperature Thi2, anode exhaust gas temperature Tho2, and cooling water temperature Tw2 after operation of a fuel cell system in a comparative example has ceased;
Figure 5 is a graph of hydrogen gas temperature Thi1, anode exhaust gas temperature Tho1, and cooling water temperature Tw1 when operation is resumed after the fuel cell system 10 in the embodiment has been allowed to stand for a long period of term below the freezing point;
Figure 6 is a graph of hydrogen gas temperature Thi2, anode exhaust gas temperature Tho2, and cooling water temperature Tw2 when operation is resumed after the fuel cell system in the comparative example has been allowed to stand for a long period of term below the freezing point;
Figure 7 is a block diagram schematically illustrating the structure of the fuel cell system 10b in a second embodiment of the invention;
Figure 8 is a flow chart of the process for switching the cooling water channel; and
Figure 9 is a perspective view of a heat exchanger 41t3 of a cooling water channel 41c of a fuel cell system in a third embodiment.

### Best Mode for Implementing the Invention

Modes of implementing the invention will be illustrated in embodiments in the following order.
A. First Embodiment
   A1. Overall Structure of Apparatus
   A2. Temperature of fuel gas at termination and start of operation
B. Second Embodiment
C. Third Embodiment
D. Variants

### A. First Embodiment

### A1. Overall Structure of Apparatus

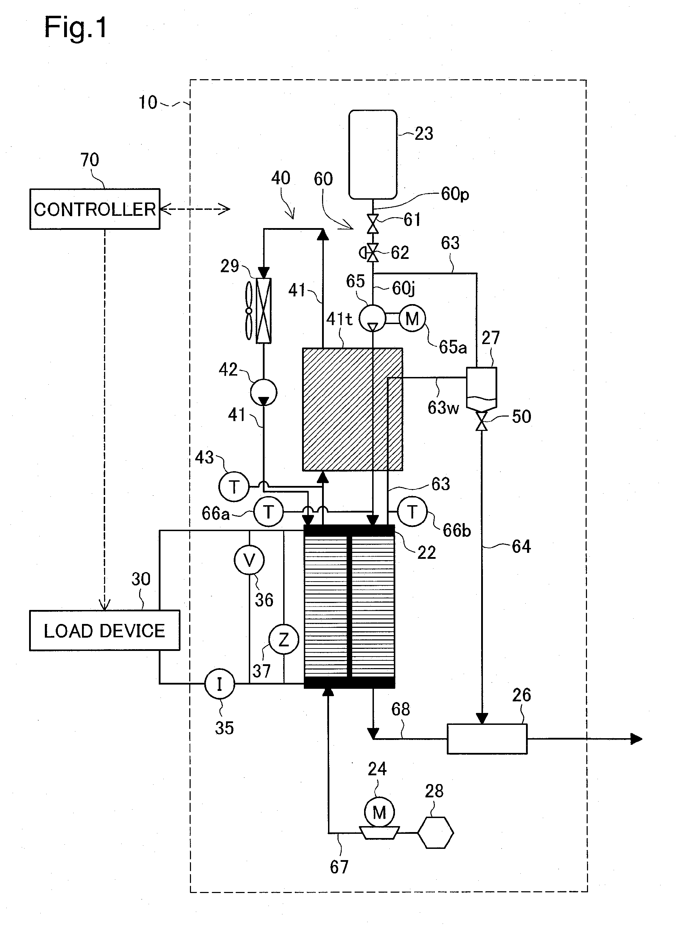

Figure 1 is a block diagram schematically illustrating the structure of a fuel cell system 10 in a first embodiment of the invention. The fuel cell system 10 comprises a fuel cell 22 which is the main power-generating unit, a hydrogen tank 23 for storing hydrogen supplied to the fuel cell 22, and an air compressor 24 for supplying compressed air to the fuel cell 22. Various types of fuel cells can be used for the fuel cell 22, but in this example, a solid polymer fuel cell is used as the fuel cell 22. The fuel cell 22 has a stacked structure comprising a plurality of stacked unit cells.

The hydrogen tank 23 can be in the form of a hydrogen cylinder in which hydrogen is stored under high pressure. Alternatively, a hydrogen-absorbing alloy can be provided in the interior to absorb hydrogen for use as a tank storing hydrogen. The hydrogen gas stored in the hydrogen tank 23 is released into the hydrogen gas supply channel 60, and the pressure is adjusted to the desired pressure by a pressure-adjusting valve 62 to allow the hydrogen to be supplied to the anode of the fuel cell 22. An FC inlet shut-off valve 61 is also provided in the hydrogen gas supply channel 60. The anode exhaust gas discharged from the anode is guided to the anode exhaust gas channel 63 and flows again into the hydrogen gas supply channel 60. In this way, the hydrogen gas remaining in the anode exhaust gas is recycled in the channel and supplied again to the electrochemical reaction. A hydrogen pump 65 equipped with a pump motor 65a is provided in the hydrogen gas supply channel 60 to allow the anode exhaust gas to circulate.

A gas-liquid separator 27 is provided in the anode exhaust gas channel 63. Water is produced at the cathode as the electrochemical reaction progresses. The water produced at the cathode is guided through the electrolytic membrane into the gas on the anode side. This water adheres to the electrode on the anode side in the fuel cell 22, interfering with contact between the electrode and hydrogen gas. As a result, the electrochemical reaction is impeded in the fuel cell 22, and the output voltage of the fuel cell 22 decreases. This is referred to as "flooding." To prevent such flooding in the fuel cell system 10 in this embodiment, the water vapor remaining in the anode exhaust gas is condensed in the anode exhaust gas channel 63 by the gas-liquid separator 27 and is discharged from the system. The "system" referred to here is a gas channel composed of the fuel gas supply channel 60 for supplying the fuel gas to the fuel cell, the channel for the fuel gas in the fuel cell 22, and the anode exhaust gas channel 63 by which the anode exhaust gas discharged from the fuel cell 22 is again supplied to the fuel gas supply channel 60.

The water in the anode exhaust gas is not always completely removed by the gas-liquid separator 27. A small amount of water is therefore included in the gas flowing through the part of the anode exhaust gas channel 63 from the gas-liquid separator 27 to the junction with the hydrogen gas supply channel 60, and the part 60j of the hydrogen gas supply channel 60 on the fuel cell 22 side from the junction with the anode exhaust gas channel 63.

An opening/closing valve 50 is provided in the gas-liquid separator 27, and the gas-liquid discharge channel 64 is furthermore connected through the opening/closing valve 50. The gas-liquid discharge channel 64 is connected to a dilution device 26. The opening/closing valve 50 is placed in an open state so that some of the anode exhaust gas flowing through the anode exhaust gas channel 63 and the condensed water in the gas-liquid separator 27 are discharged through the dilution device 26 into the atmosphere.

The fuel cell system 10 in this embodiment is structured such that the anode exhaust gas channel 63 is connected to the hydrogen gas supply channel 60 to again supply the anode exhaust gas to the electrochemical reaction. In the fuel cell 22, nitrogen penetrates from the cathode side through the electrolytic membrane to the anode side. Thus, when hydrogen gas circulates between the fuel cell 22 and the anode exhaust gas channel 63, the nitrogen concentration on the anode side increases over time. Some of the anode exhaust gas is then discharged out of the channels through the opening/closing valve 50 at certain time intervals in the fuel cell system 10. This will reduce the concentration of impurities in the anode exhaust gas channel 63 and will prevent increases in the concentration of impurities such as nitrogen in the gas supplied to the anode.

The air compressor 24 supplies compressed air as the oxidant gas through the oxidant gas supply channel 67 to the fuel cell 22 cathode. When the air compressor 24 compresses the air, air is taken in from the outside through a mass flow meter 28 equipped with a filter. The cathode exhaust gas from the cathode is guided into the cathode exhaust channel 68 and discharged to the outside.

The cathode exhaust gas channel 68 is provided with the dilution device 26 described above. Anode exhaust gas flows to the dilution device 26 through the opening/closing valve 50 connected to the gas-liquid separator and through the gas-liquid exhaust channel 64. The anode exhaust gas flowing into the dilution device 26 is diluted by being mixed with cathode exhaust gas in the dilution device 26. The mixed anode exhaust gas and cathode exhaust gas are then discharged from the cathode exhaust channel 68 into the atmosphere.

The fuel cell system 10 is furthermore equipped with a cooling component 40 for cooling the fuel cell 22 so that the operating temperature of the fuel cell 22 is at a certain temperature. The cooling component 40 is equipped with a cooling water channel 41, cooling pump 42, and radiator 29. The cooling water channel 41 is a channel for guiding the cooling water so that cooling water circulates between the interior of the fuel cell 22 and the radiator 29. The cooling water is a mixture of ethylene glycol and water, referred to as an antifreeze, and is not pure water. The cooling water pump 42 circulates cooling water in the cooling water channel 41. The radiator 29 is equipped with a cooling fan and cools cooling water that has heated up upon passing through the interior of the fuel cell 22. When the fuel cell 22 stops generating power, the controller 70 stops the cooling pump 42. As a result, the circulation of the cooling water is stopped.

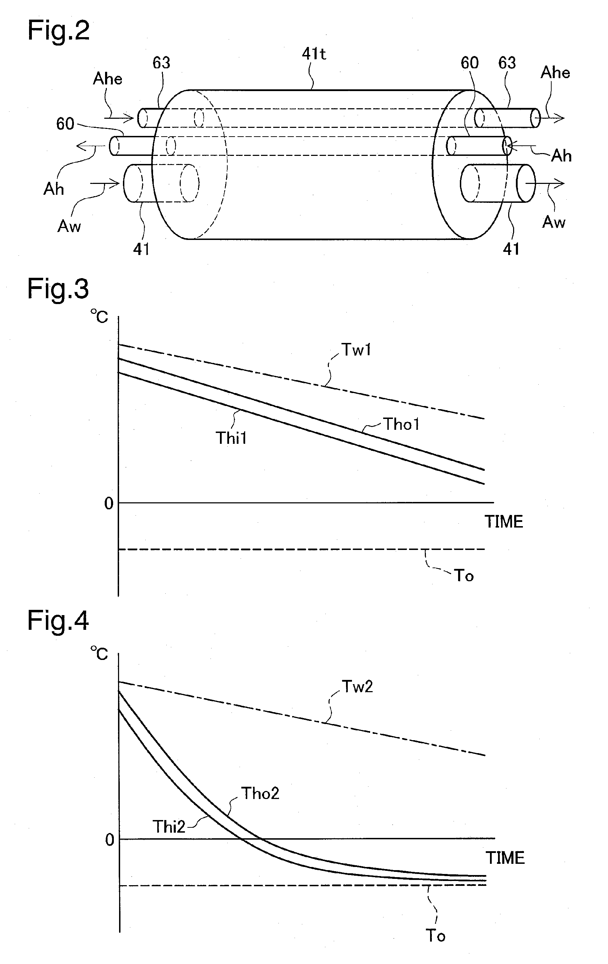

Figure 2 is a perspective view schematically illustrating the structure of a heat exchanger 41t of the cooling water channel 41. The cooling water channel 41 has a heat exchanger 41t (see Figure 1) which is at a location downstream of the fuel cell 22 and upstream of the radiator 29. The heat exchanger 41t has an interior cross section area greater than other parts of the cooling water channel 41, such as the part where the cooling water channel 41 and fuel cell 22 are joined. Thus, in the heat exchanger 41t, the flow rate of the cooling water is slower, and the cooling water is held there. The cooling water in the heat exchanger 41t is also cooling water before it is cooled by the radiator 29. In Figure 1, the heat exchanger 41t is disposed at a slight distance from the fuel cell 22, but the heat exchanger 41t is actually adjacent to the fuel cell 22, and the cooling water channel 41 is very short in the portion between the fuel cell 22 and the heat exchanger 41t.

Portions of the hydrogen gas supply channel 60 and anode exhaust gas channel 63 pas through the interior of the heat exchanger 41t. That is, a portion of the hydrogen gas supply channel 60 and of the anode exhaust gas channel 63 are each covered by the heat exchanger 41t of the cooling channel 41. In Figure 2, Arrows Aw, Ah, and Ahe indicate the direction in which the cooling water flows through the cooling water channel 41, the hydrogen gas flows through the hydrogen gas channel 60, and the anode exhaust gas flows in the anode exhaust gas channel 63, respectively.

The first circulation channel 60j of the hydrogen gas supply channel 60 is the portion from the where the flow joins the anode exhaust gas channel 63 to the fuel cell 22 (see Figure 1). In this embodiment, part of the first circulation channel 60j is covered by the heat exchanger 41t of the cooling water channel 41. The cooling water thus keeps warm the first circulation channel 60j in which water-containing anode exhaust gas is circulated, as well as the gas in the interior. The portion of the hydrogen has supply channel 60 from the hydrogen tank 23 to where the flow joins the anode exhaust gas channel 63 is indicated as a new gas supply channel 60p in Figure 1 to distinguish it from the first circulation channel 60j.

The second circulation channel 63w is the part of the anode exhaust gas channel 63 from the fuel cell 22 to the gas-liquid separator 27 (see Figure 1). Of the piping forming the second circulation channel 63w in this embodiment, the surface area of the piping located in the heat exchanger 41t is about 70% of the total surface area of the second circulation channel 63w. Of the piping forming the anode exhaust gas channel 63 in which the hydrogen gas is circulated and the first circulation channel 60j, the surface area of the piping located in the heat exchanger 41t is about 65% of the total surface area of the first circulation channel 60j and the anode exhaust gas channel 63.

Fuel cell peripheral devices will be the term used below to refer to devices operating with the power generation of the fuel cell 22, such as the aforementioned air compressor 24, cooling water pump 42, or the radiator fan or valves provided in the channels. These fuel cell peripheral devices operate upon the supply of power from the fuel cell 22.

A load device 30, which is a power-consuming device to which power is supplied from the fuel cell 22, is connected to the fuel cell 22. The load device 30 may include, for example, electrical motors that operate upon the supply of power from the fuel cell 22. In Figure 1, the load device 30 is represented as a load that is independent of the fuel cell system 10, but the above fuel cell peripheral devices are included as load devices 30. That is, in Figure 1, devices to which power is supplied from the fuel cell 22 are represented as load devices 30, including fuel cell peripheral devices such as the air compressor 24.

The fuel cell system 10 is equipped with a controller 70 for controlling the operation of the various components of the fuel cell system 10. The controller 70 is composed of a logic circuit based on a microcomputer. Specifically, the controller 70 is equipped with a CPU for running certain computations and the like according to predetermined control programs, ROM in which are pre-stored control data, control programs, and the like which are needed for various computer processes to be run by the CPU, RAM for the temporary reading and writing of various types of data which are similarly necessary for various computer processing by the CPU, and I/O ports, etc., for the input and output of various signals.

The controller 70 retrieves data related to load commands for load devices 30 or various sensor detection signals for the various ampere meters 35, voltage meters 36, impedance gauges 37, temperature sensors 43, 66a, 66b, and the like (see Figure 1) provided in the various parts of the fuel cell system 10. The controller 70 also outputs drive signals to various parts related to the power generation of the fuel cell 22, such as the radiator fan or valves provided in the channels, or pumps with which the fuel cell system 10 is equipped. In Figure 1, the controller 70 is described as an external component of the fuel cell system 10 in order to show elements in which signals are exchanged between the controller 70 and the structural elements of the fuel cell system 10.

### A2. Temperature of fuel gas when operation stopped and started

Figure 3 is a graph of hydrogen gas temperature Thi1, anode exhaust gas temperature Tho1, and cooling water temperature Tw1 after operation of the fuel cell system 10 in the embodiment has ceased. In Figure 3, the vertical axis is the temperature (°C). The horizontal axis is the elapsed time after operation of the fuel cell system 10 has ended. To is the external air temperature. The hydrogen gas temperature Thi1 of the hydrogen gas supply channel 60 is measured by the temperature sensor 66a (see Figure 1) located in the hydrogen gas supply channel 60 between the fuel cell 22 and the heat exchanger 41t of the cooling water channel 41. The temperature Tho1 of the anode exhaust gas in the anode exhaust channel 63 is measured by the temperature sensor 66b located in the anode exhaust gas channel 63 between the heat exchanger 41t and the fuel cell 22. The cooling water temperature Tw1 is measured by the temperature sensor 43 located in the cooling water channel 41 between the heat exchanger 41t and the fuel cell 22.

Figure 4 is a graph of the hydrogen gas temperature Thi2, anode exhaust gas temperature Tho2, and cooling water temperature Tw2 after operation of a fuel cell system in a comparative example has ceased. The fuel cell system of the comparative example does not have, in a cooling water channel 41, the heat exchanger 41t covering the piping of the hydrogen gas supply channel or anode exhaust gas channel. As a result, in the fuel cell system of the comparative example, neither the hydrogen gas supply channel and the hydrogen gas passing through it nor the anode exhaust gas channel and the anode exhaust gas passing through it pick up heat from the cooling water through the piping of the anode exhaust gas channel or hydrogen gas supply channel. In other respects, the fuel cell system of the comparative example is the same as the fuel cell system 10 of the embodiment (see Figure 1). The temperatures in the graph of Figure 4 are also measured by temperature sensors located in the same locations as in the fuel cell system 10 of the embodiment.

As illustrated in Figure 3, in the fuel cell system 10 of this embodiment, the temperature Tw1 of the cooling water which has been warmed by the operation of the fuel cell 22 does not decrease rapidly after operation of the fuel cell 22 has ended, even when the external air temperature is 0°C or below. That is, the temperature Tw1 of the cooling water decreases gradually after the operation of the fuel cell 22 has ended. As such, the temperatures Thi1 and Tho1 of the hydrogen gas and anode exhaust gas which take on the heat from the cooling water through the heat exchanger 41t also decrease gradually.

Part of the hydrogen gas supply channel 60 is covered by the heat exchanger 41t of the cooling water channel 41. Thus, no heat is released directly to the outside from the piping of the hydrogen supply gas channel 60 in the part of the hydrogen gas supply channel 60 which is covered by the heat exchanger 41t. That is, heat is not as readily released to the outside compared to when only a part of the hydrogen gas supply channel 60 is in contact with the cooling water channel 41. In this respect, therefore, the temperature of the hydrogen gas supply channel 60 and of the hydrogen gas inside is prevented from rapidly decreasing.

Similarly, part of the anode exhaust gas channel 63 is covered by the heat exchanger 41t of the cooling water channel 41. Thus, no heat is released directly to the outside from the piping of the anode exhaust gas channel 63 in the part of the anode exhaust gas channel 63 which is covered by the heat exchanger 41t. That is, heat is not as readily released to the outside compared to when only a part of the anode exhaust gas channel 63 is in contact with the cooling water channel 41. In this respect, therefore, the temperature of the anode exhaust gas channel 63 and of the anode exhaust gas inside is prevented from rapidly decreasing.

As a result, in this embodiment, the temperature Thi1 of the hydrogen gas in the hydrogen gas supply channel 60 and the temperature Tho1 of the anode exhaust gas in the anode exhaust gas channel 63 will not rapidly decrease to 0°C or below after the operation of the fuel cell system 10 has ended, even when the external air temperature is 0°C or below. Thus, in the fuel cell system 10 in this embodiment, even after operation has been ended in environments where the external air temperature is 0°C or below, there is less chance of moisture freezing in the hydrogen gas supply channel 60 and anode exhaust gas channel 63 and impeding the flow of gas when operations are resumed.

Meanwhile, in the fuel cell system of the comparative example, the hydrogen gas and anode exhaust gas do not take on heat from the cooling water through the piping. Also, the hydrogen gas supply channel and anode exhaust gas channel in the fuel cell system of the comparative example are not covered by the heat exchanger 41t of the cooling water channel 41. Heat is therefore released directly from the hydrogen gas supply channel and anode exhaust gas channel after the operation of the fuel cell system has ended. Thus, in the fuel cell system of the comparative example, as illustrated in Figure 4, the hydrogen gas and anode exhaust gas temperature Thi2 and Tho2 rapidly decreases after the termination of the fuel cell 22 operation and approach the external air temperature, falling to the freezing point. As such, in the fuel cell system of the comparative example, moisture freezes in the hydrogen gas supply channel and anode exhaust gas channel, tending to impede the flow of gas when operation is resumed.

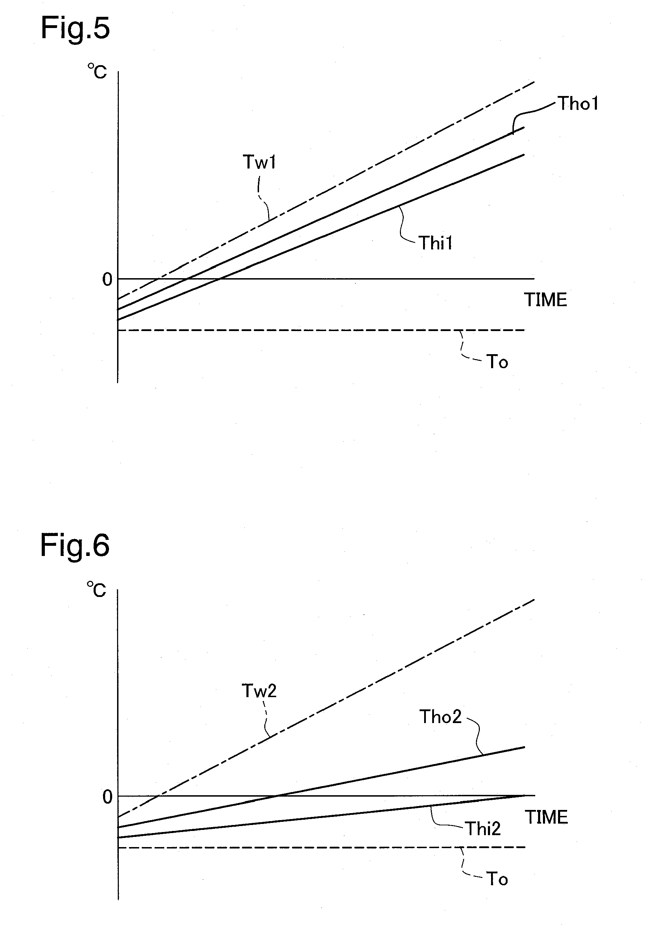

Figure 5 is a graph of hydrogen gas temperature Thi1, anode exhaust gas temperature Tho1, and cooling water temperature Tw1 when operation is resumed after the fuel cell system 10 in the embodiment has been allowed to stand for a long period of term below the freezing point. The temperatures in the graph were measured in the same manner as Figure 3.

As illustrated in Figure 5, in the fuel cell system 10 of the embodiment, the temperature of the cooling water which had been warmed as a result of the operation of the fuel cell 22 increases rapidly, even when the external air temperature is 0°C or below. The temperatures Thi1 and Tho1 of the hydrogen gas and anode exhaust gas which take on heat from the cooling water through the heat exchange 41t also increase rapidly. That is, in this embodiment, the temperature Thi1 of the hydrogen gas in the hydrogen gas supply channel 60 and the temperature Tho1 of the anode exhaust gas in the anode exhaust gas channel 63 are soon over 0°C after the operation of the fuel cell system 10 resumes, even when the external air temperature is 0°C or below.

The hydrogen gas supply channel 60 and anode exhaust gas channel 63 are also partially covered by the heat exchanger 41t of the cooling water channel 41. The heat taken on from the heat exchanger 41t is thus not as readily released to the outside compared to when only a part of the hydrogen gas supply channel 60 or anode exhaust gas channel 63 is in contact with the cooling water channel 41. In this respect, therefore, the hydrogen gas supply channel 60, anode exhaust gas supply channel 63, and the gas inside them are effectively heated in the embodiment.

As such, in this embodiment, ice is soon melted after the operation of the fuel cell system 10 is resumed, even when moisture freezes in the hydrogen gas supply channel 60 and the anode exhaust gas channel 63. It is thus possible to reduce the effects caused by the problem of ice in the hydrogen gas supply channel 60 and the anode exhaust gas channel 63 impeding the flow of gas during operations.

Figure 6 is a graph of the hydrogen gas temperature Thi2, anode exhaust gas temperature Tho2, and cooling water temperature Tw2 when operation is resumed after the fuel cell system in the comparative example has been allowed to stand for a long period of term below the freezing point. In the fuel cell system of the comparative example, heat is not supplied from the cooling water to the hydrogen gas supply channel and anode exhaust gas channel. In the fuel cell system of the comparative example, therefore, as illustrated in Figure 6, the temperatures Thi2 and Tho2 of the hydrogen gas and anode exhaust gas take a long time to surpass 0°C after operation of the fuel cell system is resumed. Moisture which freezes in the hydrogen gas supply channel and anode exhaust gas channel thus tends to impede the flow of gas in the fuel cell system of the comparative example.

In the present embodiment, part of the first circulation channel 60j and anode exhaust gas channel 63 in which fuel gas containing moisture circulates are covered by the heat exchanger 41t of the cooling water channel 41 (see Figure 1). The proportion of the surface area of piping located in the heat exchanger 41t out of the piping forming the first circulation channel 60j and anode exhaust gas channel 63 is about 60%. Thus, during the operation of the fuel cell system 10, the piping through which the moisture-containing fuel gas flows (anode exhaust gas channel 63 and first circulation channel 60j) can be efficiently heated using the cooling water. The piping through which moisture-containing fuel gas flows can be efficiently kept warm when the operation of the fuel cell system 10 is ended.

The second circulation channel 63w through which flows the anode exhaust gas before the water is removed by the gas-liquid separator 27 is also covered by the heat exchanger 41t of the cooling water channel 41 in this embodiment (see Figure 1). The proportion of the surface area of piping located in the heat exchanger 41t out of the piping forming the second circulation channel 63w is about 75%. The cooling water can therefore effectively keep warm and heat the second circulation channel 63w through which flows the gas containing most of the moisture-out of the channels through which the hydrogen gas flows.

### B. Second Embodiment

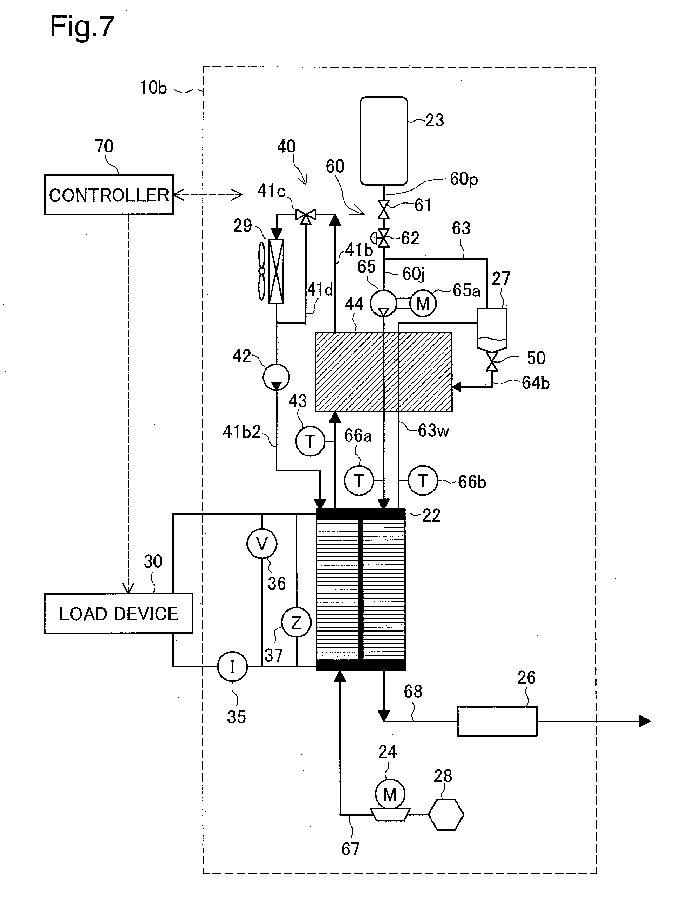

Figure 7 is a block diagram schematically illustrating the structure of the fuel cell system 10b in a second embodiment of the invention. The cooling water channel 41b of the fuel cell system 10b in the second embodiment is equipped with a cooling water tank 44 at a location that is downstream of the fuel cell 22 and upstream of the radiator 29. The cooling water tank 44 is a tank in which a certain amount of cooling water collects. The resulting moisture separated from the anode exhaust gas by the gas-liquid separator 27 is supplied to the cooling water tank 44 through the opening/closing valve 50 and gas-liquid exhaust channel 64b. The cooling water channel 41b is also equipped with a three-way valve 41c and a bypass circuit 41d which bypasses the radiator 29. In all other respects, the fuel cell system 10b of the second embodiment is the same as the fuel cell system 10 in the first embodiment (see Figure 1).

The cooling water discharged from the fuel cell 22 is sent to the cooling water tank 44, and the cooling water is sent from the cooling water tank 44 to the radiator 29. The cooling water cooled by the radiator 29 then returns through the cooling water channel 41b2 to the fuel cell 22. That is, the cooling water tank 44 is part of the cooling water channel. The cooling water from the cooling water tank 44 is cooling water before being cooled by the radiator 29.

Part of the hydrogen gas supply channel 60 and the anode exhaust gas channel 63 pass through the interior of the cooling water tank 44. That is, the hydrogen gas supply channel 60 and the anode exhaust gas channel 63 are partially covered by the cooling water tank 44.

In this type of structure, the following effects are achieved in the same manner as in the first embodiment. That is, the temperature Thi1 of the hydrogen gas in the hydrogen gas supply channel 60 and the temperature Tho1 of the anode exhaust gas in the anode exhaust gas channel 63 will not rapidly decrease to 0°C or below after the operation of the fuel cell system 10 has ended, even when the external air temperature is 0°C or below (see Figure 3). Thus, even after operation of the fuel cell system 10b has been ended in environments where the external air temperature is 0°C or below, there is less chance of moisture freezing in the hydrogen gas supply channel 60 and anode exhaust gas channel 63 and impeding the flow of gas when operations are resumed.

Additionally, the temperature Thi1 of the hydrogen gas in the hydrogen gas supply channel 60 and the temperature Tho1 of the anode exhaust gas in the anode exhaust gas channel 63 take on heat from the cooling water and are thus soon over 0°C even after the operation of the fuel cell system 10 resumes in environments where the external air temperature is 0°C or below (see Figure 5). As such, it is possible to reduce the chance of ice impeding the flow of gas during operations, even when ice is present in the hydrogen gas supply channel 60 and the anode exhaust gas in the anode exhaust gas channel 63.

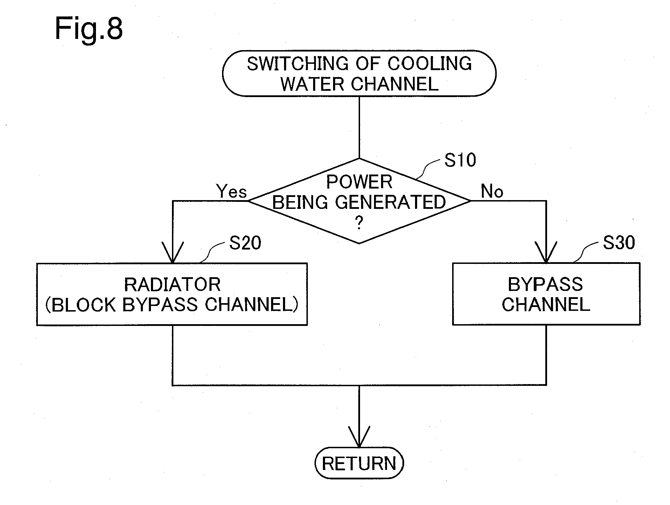

Figure 8 is a flow chart of the process for switching the cooling water channel. In the second embodiment, the controller 70 switches the cooling water channel according to whether or not power is being generated by the fuel cell 22. In Step S10, the controller 70 determines whether or not power is being generated by the fuel cell 22. When power is being generated by the fuel cell 22, the controller 70 controls the three-way valve 41c to allow cooling water to flow to the radiator 29 (Step S20). The bypass channel 41d is blocked, preventing cooling water from flowing to the bypass channel 41d. Thus, when power is being generated by the fuel cell 22, cooling water is cooled by the radiator 29.

On the other hand, when power is not being generated by the fuel cell 22, the controller 70 controls the three-way valve 41c to connect the cooling water channel to the bypass channel 41d (Step S30). The cooling water channel toward the radiator 29 is blocked, preventing cooling water from flowing to the radiator 29. Thus, when no power is being generated by the fuel cell 22, the heat from the cooling water is not released through the radiator 29.

In the same manner as in the first embodiment, no cooling water is circulated when power generation is stopped in the second embodiment as well. Thus, when power generation has been stopped, the cooling water is not cooled to the same extent that it is during power generation when cooling water is being circulated. However, even though the cooling water is actively not being circulated, the following problems occur when the cooling water can flow to the radiator 29 when the power generation by the fuel cell 22 is stopped. That is, cooling water that has been cooled through the release of heat by the radiator 29 can take on heat from other cooling water in the cooling water channel 41b as a result of conduction or flowing in the cooling water channel 41b.

However, in the fuel cell system 10b of the second embodiment, when no power is being generated by the fuel cell 22, the cooling water channel toward the radiator 29 is blocked (see Step S30) to prevent the cooling water as a whole from being cooled by the radiator 29. As a result, the hydrogen gas and anode exhaust gas are warmed, upon passing through the heat exchanger 41t, by the cooling water which retains heat over a long period of time when the operation of the fuel cell 22 has been stopped. According to the second embodiment, therefore, water can be prevented from freezing in the hydrogen gas supply channel 60 and anode exhaust gas channel 63 over long periods of time, even after the operation of the fuel cell system 10 has ceased in environments where the external air temperature is 0°C or below.

### C. Third Embodiment

In the first and second embodiments, the hydrogen gas supply channel 60 and the anode exhaust gas channel 63 were covered by the cooling water channel 41. However, in the fuel cell system of the third embodiment, the cathode exhaust gas channel 68 is also covered by the cooling water channel 41c. In other respects, it is the same as the fuel cell system 10 in the first embodiment.

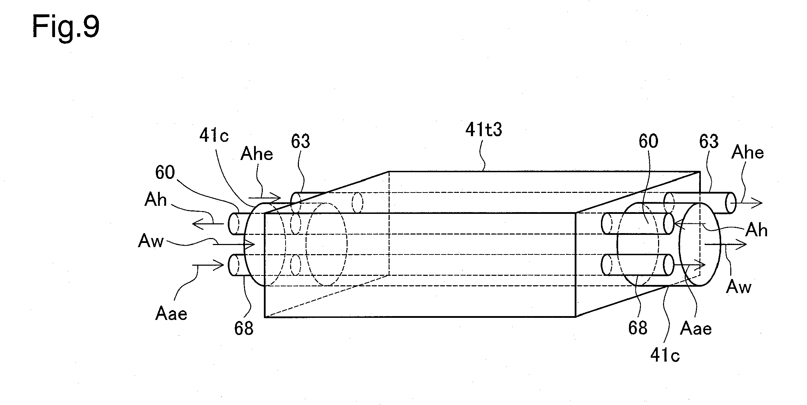

Figure 9 is a perspective view of the heat exchanger 41t3 of the cooling water channel 41c of the fuel cell system in the third embodiment. The symbols are the same as in Figure 2. However, the arrow Aae indicates the direction in which the cathode exhaust gas flows. The heat exchanger 41t in the first embodiment was a virtually cylindrical pipe (see Figure 2), but the heat exchanger 41t3 in the third embodiment has a nearly parallelepiped configuration. The heat exchanger 41t3 is a part of the cooling water channel 41c. Similar to the heat exchanger 41t in the first embodiment, it is downstream of the fuel cell 22 and upstream of the radiator 29.

Part of the hydrogen gas supply channel 60 and anode exhaust gas channel 63 pass through the interior of the heat exchanger 41t3. Part of the cathode exhaust gas channel 68 also passes through the interior of the heat exchanger 41t3. That is, the hydrogen gas supply channel 60, anode exhaust gas channel 63, and cathode exhaust gas channel 68 are each partially covered by the cooling water channel 41c.

In this way, the following effects are achieved in the same manner as in the first embodiment. That is, even after operations have ceased in environments where the external air temperature is 0°C or below, there is less chance that the flow of gas will be impeded when operations resume as a result of moisture freezing in the hydrogen gas supply channel 60 or anode exhaust gas channel 63. It is also possible to reduce the effects caused by the problem of gas flow being impeded during operations by ice in the hydrogen gas supply channel 60 and anode exhaust gas channel 63 when operation of the fuel cell system 10 is started in environments where the external air temperature is 0°C or below.

Furthermore, in the third embodiment, after operation of the fuel cell system 10 has ceased in environments where the external air temperature is 0°C or below, the temperature of the cathode exhaust gas in the cathode exhaust gas channel 68 will not rapidly decrease to 0°C or below. Thus, even when operation has ceased in environments where the external air temperature is 0°C or below, there is less of a chance that the flow of cathode exhaust gas will be impeded when operation resumes as a result of frozen moisture contained in the cathode exhaust gas in the cathode exhaust gas channel 68.

Furthermore, even when operation of the fuel cell system 10 resumes in environments where the external air temperature is 0°C or below, the temperature of the cathode exhaust gas in the cathode exhaust gas channel 68 will soon surpass 0°C as a result of taking on heat from the cooling water. As such, even when ice is present in the cathode exhaust gas channel 68, it is possible to reduce the effects of the problem of impeded cathode gas flow during operations.

### D. Variants

Note that the present invention is not limited to the examples of embodiment and forms of embodiment described above, but rather can be embodied in a variety of forms without deviating from the intent thereof, and can, for example, be modified as described below.

### D1. Variant 1

In the above embodiments, the hydrogen gas supply channel 60, anode exhaust gas channel 63, and cathode exhaust gas channel 68 were all covered by the heat exchanger 41t, cooling water tank 44, or heat exchanger 41t3 which were a part of the cooling water channel and were of the same framework. However, the hydrogen gas supply channel 60, anode exhaust gas channel 63, and cathode exhaust gas channel 68 may also be covered by the cooling water channel 41 in other embodiments. For example, the cooling water channel 41 may be branched, and heat exchangers can be provided in each branch, so that the hydrogen gas supply channel 60, anode exhaust gas channel 63, and cathode exhaust gas channel 68 are covered by the heat exchanges of each branch. For example, the hydrogen gas supply channel 60, anode exhaust gas channel 63, and cathode exhaust gas channel 68 may each be constructed of doubled pipes, with the cooling water flowing in the outer portion.

In the above embodiments, the portion of the cooling water channel 41 through which the hydrogen gas supply channel 60, anode exhaust gas channel 63, and cathode exhaust gas channel 68 passed had a greater cross section area than the other parts. However, the part of the cooling water channel 41 through which the hydrogen gas supply channel 60, anode exhaust gas channel 63, and cathode exhaust gas channel 68 pass may also have the same cross section area as other parts.

In the above embodiments, the cooling water flowed in a direction parallel to the direction in which the gas flowed in the portions of the cooling water channel 41 through which the hydrogen gas supply channel 60, anode exhaust gas channel 63, and cathode exhaust gas channel 68 passed. However, embodiments of the cooling water channel 41 are not limited to this. It is possible to fashion an embodiment in which the cooling water flows in a direction which is not parallel to the direction in which the gas flows.

That is, the fuel cell system can be such that the cooling water channel covers at least the part of the reaction gas channel in which flows the reaction gas supplied to the fuel cell or discharged from the fuel cell. The cooling water channel "covering" the reaction gas channel means that there is a plane surface such that the entire circumference of the cross section of the reaction gas channel is surrounded by the cooling water channel when the reaction gas channel and cooling water channel are cut along the plane surface.

### D2. Variant 2

In the above embodiments, part of the first circulation channel 60j and the anode exhaust gas channel 63 through which fuel gas containing moisture flows were covered by the heat exchanger 41t of the cooling water channel 41. Of the piping forming them, the proportion of the surface area of the piping located in the heat exchanger 41t is about 65%. However, the cooling water channel, anode exhaust gas channel, and hydrogen gas supply channel can have other structures. However, of the piping through which the fuel gas circulates, the proportion of the surface area of the piping located in the heat exchanger is preferably at least 50%. The proportion is more preferably at least 60%, and still more preferably at least 70%.

In the above embodiments, part of the second circulation channel 63w was covered by the heat exchanger 41t of the cooling water channel 41. The second circulation channel 63w is the channel forming the part of the anode exhaust gas channel 63 from the fuel cell 22 to the gas-liquid separator 27. Of the piping forming the second circulation channel 63w, the proportion of the surface area of the piping located in the heat exchanger 41t was about 70%. However, the cooling water channel and anode exhaust gas channel can have other structures. However, of the channel through which flows the anode exhaust gas before water is removed by the gas-liquid separator 27, the proportion of the surface area of the piping located in the cooling water channel may be at least 60%. The proportion is more preferably at least 70%, and still more preferably at least 75%.

### D3. Variant 3

In the above embodiments, part of the hydrogen gas supply channel 60, anode exhaust gas channel 63, and cathode exhaust gas channel 68 passed through the interior of the cooling water channel 41. In contrast, the fuel cell system can assume an embodiment in which the oxidant gas supply channel 67 passes through the interior of the cooling water channel 41. This will prevent the moisture contained in the air from freezing in the oxidant gas supply channel 67 when the operation of the fuel cell system ceases, and will allow frozen moisture to rapidly melt when operation of the fuel cell system starts. The cooling water channel 41 and oxidant gas supply channel can assume various embodiments in the same manner as the hydrogen gas supply channel 60, anode exhaust gas channel 63, and cathode exhaust gas channel 68 described in Variant 1.

Gases other than hydrogen or air can be used as the gas that is supplied to the fuel cell and discharged from the fuel cell through the reaction gas channel covered by the cooling water channel. For example, the fuel cell system can be such that a gas channel through which oxygen is supplied as the oxidant gas is covered by cooling water. That is, the fuel cell system may be such that the cooling water channel covers at least part of the reaction gas channel through which flows the reaction gas that is supplied to the fuel cell or that is discharged from the fuel cell.

### D4. Variant 4

In the above embodiments, the oxidant gas was supplied to the fuel cell 22 by the air compressor 24 (see Figures 1 and 7). However, the fuel cell system 10 can be such that air is supplied as the oxidant gas to the fuel cell 22 by a blower instead of the air compressor 24. In an embodiment of this sort, the oxidant gas and cathode exhaust gas temperature are generally lower than in embodiments in which the oxidant gas is supplied by the air compressor. This embodiment is therefore particularly desirable when the cathode exhaust gas channel 68 and oxidant gas supply channel 67 are covered by the cooling water channel 41.

### D5. Variant 5

In the above embodiments, the radiator 29 for cooling the cooling water was equipped with a cooling fan. However, the structure for cooling the cooling water can assume other embodiments. Examples include structures in which heat escapes by being conducted to other structural materials, and structures which are equipped with a cooling fin and are exposed to external air.

In the above embodiments, the cooling water was a mixture of ethylene glycol and water, but other structures may be used, such as mixtures of propylene glycol and water. The "cooling water" need not necessarily contain H₂O. That is, the cooling water may be a liquid permitting heat to be conducted.

The invention of the present application was illustrated in detail above with reference to preferred exemplary embodiments. However, the invention of the present application is not limited to the embodiments and structures described above. The invention of the present application includes various modifications and equivalent structures. Furthermore, the various elements of the invention that have been disclosed were disclosed in various combinations and structures, but these were illustrative, and the various elements may be fewer or greater. The elements may also be one. The embodiments are included within the scope of the invention in the present application.

### INDUSTRIAL APPLICABILITY

The present invention is applicable to fuel cell systems, power generators in which fuel cells are the source of power, and vehicles that have a power source making use of a fuel cell system.

## Claims

1. A fuel cell system, comprising:
a fuel cell;
a reaction gas channel in which reaction gas flows, the reaction gas being supplied to the fuel cell or being discharged from the fuel cell; and
a cooling water channel in which cooling water flows, wherein the cooling water has cooled the fuel cell, wherein
the cooling water channel covers at least part of the reaction gas channel.

2. A fuel cell system according to Claim 1, wherein
the cooling water channel comprises:
a cooling component configured to cool the cooling water; and
a cooling water retention component provided between the fuel cell and the cooling component, wherein cross section area of the cooling water retention component is greater than that of a fuel cell-connected portion of the cooling water channel, the fuel cell-connected portion being connected to the fuel cell, wherein
at least part of the reaction gas channel passes into the cooling water retention component.

3. A fuel cell system according to Claim 1, further comprising:
a hydrogen storage component configured to store hydrogen gas as the reaction gas, wherein
the reaction gas channel includes:
a reaction gas supply channel configured to allow hydrogen gas supplied from the hydrogen storage component to flow to the fuel cell; and
a reaction gas recycling channel in which at least part of the hydrogen gas discharged from the fuel cell is supplied again to the fuel cell, wherein
at least part of the reaction gas recycling channel is covered by the cooling water channel.

4. A fuel cell system according to Claim 1, wherein
the cooling water channel includes:
a cooling component configured to cool the cooling water;
a cooling water recycling channel in which cooling water discharged from the cooling component is again supplied to the fuel cell;
a cooling component bypass channel configured to again supply the cooling water to the fuel cell without passing through the cooling component; and
a channel switching component allowing the flow of cooling water to the cooling component and the cooling component bypass channel to be selectively blocked, wherein
the channel switching component blocks the flow of cooling water to the cooling component when the fuel cell system is not generating power.
